# EUROPEAN PATENT APPLICATION

(11) **EP 1 279 377 A1**
(43) Date of publication of application: **29.01.2003**
(21) Application number: 02425473.2
(22) Date of filing: 19.07.2002
(51) Int. Cl.: A61C 1/00

(54) **A filtering device applicable to the supply conduits of dental handpieces**

(30) Priority: 27.07.2001 IT BO20010488
(71) Applicant: CASTELLINI S.p.A., I-40013 Castel Maggiore (Bologna) (IT)
(72) Inventor: Castellini, Franco, 40124 Bologna (IT)
(74) Representative: Lanzoni, Luciano

(57) **Abstract**

A filtering device is applicable to supply conduits (1) for handpieces (2), the conduits (1) comprising: at least one a first channel (3) that supplies an operating fluid to the handpiece (2); the handpiece (2) being equipped with a second channel (4) for the passage of fluid; there being connecting means (5) operating between the first channel and the second channel (3, 4) at the ends of the supply conduit (1) and of the handpiece (2), respectively; and two-way fluid filtering means (6) being fitted to the connecting means (5) between the conduit (1) and the handpiece (2).

## Description

The present invention relates to a filtering device applicable to the supply conduits of dental handpieces, especially those mounted on dental units.

One of the most important features of a dental unit, and one which has undergone considerable development in recent years is the system which supplies water for dental equipment and handpieces. With increases in the general standards of hygiene required of dental equipment, several advances have been made in the design and function of the water system of dental units not only to guarantee its efficient operation and durability but also to keep the conduits at the highest possible level of sterility both during and between patient treatment sessions.

In the case of terminal conduits in this system, which may also be present in equipment that is independent of the dental unit, that is, those conduits that enable direct connection between the handpiece and the user fluid (water, air, physiological saline, etc) through an end connector, known hygiene solutions comprise bacterial filter systems fitted directly to the terminal conduit.

Basically, these systems comprise a deviator element, fitted at least on the fluid supply line and designed to enable the fluid to flow through a bacteria filter and then back into the terminal conduit that supplies the handpiece connected to the terminal conduit.

This filtering system improves hygiene by reducing the bacterial charge of the terminal conduit but has several disadvantages: firstly, the deviator is a relatively large piece of equipment added to the system, which makes the conduit clumsier and more difficult to handle. Another disadvantage is that, precisely because of this type of structure, the end portion of the terminal conduit is not filtered and remains exposed to contamination by bacteria sucked back in through the handpiece itself.

In other words, it has been found that when a handpiece (for example, a turbine, a micromotor, etc) is switched off, a certain amount of fluid is sucked back into the handpiece, enabling bacteria to enter the fluid conduits in the handpiece and make its way back into the unfiltered end portion of the terminal conduit, thus contaminating the end portion itself.

This means that the bacteria can infect another patient when the handpiece is turned on again and that it is practically impossible to keep the end portion of the conduit at the highest level of sterility without performing a general sterilising or disinfection treatment before or after every session with a different patient.

The aim of the present invention is to overcome the above mentioned drawbacks by providing a fluid filtering device that is small, easy and safe to apply to the supply conduits while guaranteeing the maximum level of sterility in the conduit and in the handpiece to which it is connected.

The invention accordingly provides a filtering device applicable to the supply conduits for dental handpieces comprising: a first channel that supplies an operating fluid to the handpiece; the handpiece being equipped with a second channel for the passage of fluid; there being connecting means operating between the first channel and the second channel at the ends of the supply conduit and of the handpiece, respectively; and two-way fluid filtering means being fitted to the connecting means between the conduit and the handpiece.

The technical characteristics of the invention, with reference to the above aims, are clearly described in the claims below and its advantages are apparent from the detailed description which follows, with reference to the accompanying drawings which illustrate a preferred embodiment of the invention provided merely by way of example without restricting the scope of the inventive concept, and in which:
- Figure 1 is an exploded perspective view of a dental handpiece and a supply conduit equipped with a filtering device according to the present invention;
- Figure 2 is a schematic side view, with some parts in cross section and others cut away, of the dental handpiece and the conduit of Figure 1 equipped with the filtering device according to the present invention.

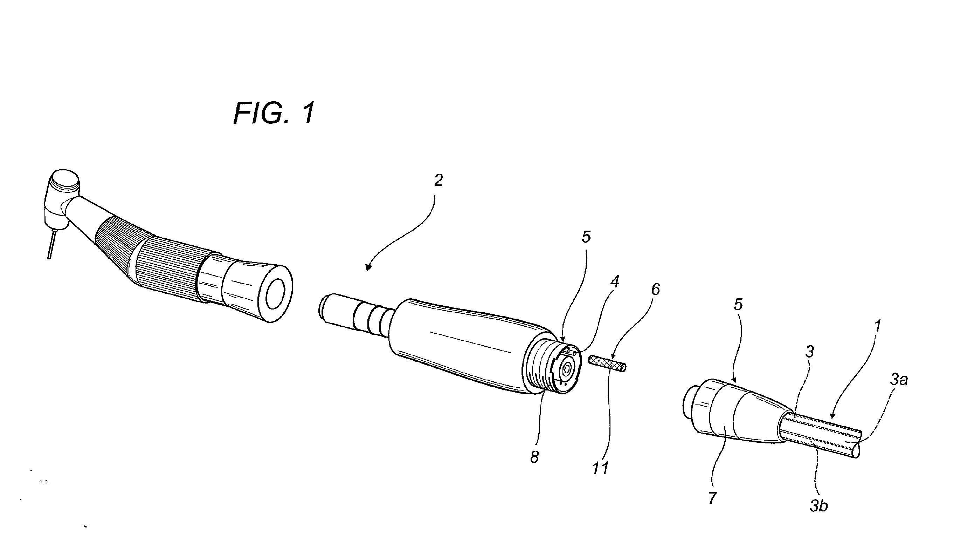

With reference to the accompanying drawings, in particular Figure 1, the filtering device according to the invention can be applied to supply conduits 1 for dental handpieces 2.

The conduits 1 may form an integral part of a conventional dental unit (not illustrated) or of a separate, self-contained apparatus, without thereby restricting the scope of the invention, and may be used to supply handpieces of different kinds, such as turbines, micromotors, etc.

These conduits 1, or "hoses" as they are more usually called by experts in the trade, comprise: at least one first channel 3 that supplies an operating fluid to the handpiece 2; the handpiece 2 being in turn equipped with a second channel 4 for the passage of fluid, there being connecting means 5 operating between the first channel 3 and the second channel 4 at the ends of the supply conduit 1 and of the handpiece 2, respectively, in such a way as to enable the two channels 3 and 4 to be joined coaxially and thus allowing the fluid to flow into the handpiece 2.

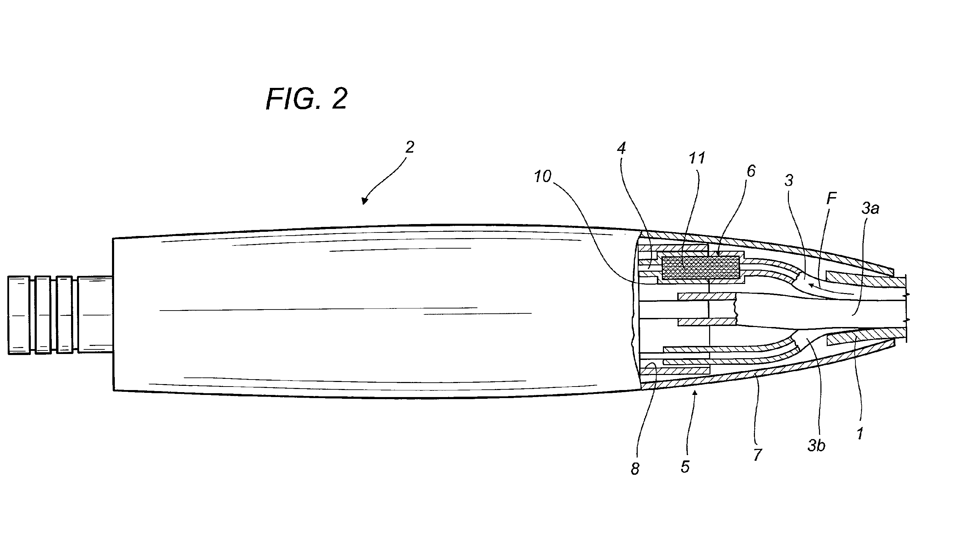

With reference also to Figure 2, the conduit 1 normally has a plurality of channels for supplying the handpiece with, for example, motive power (air or electricity), labelled 3a, or a fluid, such as air, labelled 3b, or, as in the non-restricting example illustrated here, the first channel 3 supplies water or other fluid (for example, physiological saline) to be used on the patient.

The numeral 6 denotes means used for filtering said fluid and fitted to the connecting means 5 between the conduit 1 and the handpiece 2.

In particular, but without limiting the scope of the invention, the filtering means 6 must be at least capable of trapping bacteria.

As shown also in Figure 2, the fluid filtering means 6 can be fitted to the end of the conduit 1 forming the aforementioned connecting means 5.

Alternatively, the fluid filtering means 6 can be fitted to the end of the handpiece 2 which in turn forms the connecting means 5.

In particular, the connecting means 5 may comprise a connecting endpiece 7 fitted to the end of the conduit 1, the endpiece 7 being fastened, by snap-on means or by screwing, to a corresponding connecting portion 8 located on the end of the handpiece 2 in such a way as to join the first and the second channel 3 and 4, as well as any other channels needed to operate the handpiece 2.

In the structure just mentioned, the filtering means 6 may be fitted to the connecting endpiece 7 or to the connecting portion 8 of the handpiece 2.

In this case, the endpiece 7 or the connecting portion 8 of the handpiece 2 may present an independent seat 9 or 10, formed by a corresponding enlarged end portion of the first or the second channel 3 or 4 designed to allow connection to the filtering means 6.

Figure 2 shows a preferred structural solution where both the connecting endpiece 7 and the connecting portion 8 present a coaxial seat 9 and 10 formed by corresponding enlarged coaxial end portions of the first and of the second channel 3 and 4, both designed to allow connection to the filtering means 6.

As shown in Figures 1 and 2, the filtering means 6 may consist of a cylindrical filter cartridge 11 of the disposable type, for single use or to be changed daily. The filter cartridge 11 may be made of spongy plastic material so that it adapts to and fits snugly in the seat and is preferably designed to trap bacteria in both directions, that is to say, from the fluid flowing in the supply direction (see arrow F in Figure 2) and in the opposite direction.

In this way, the two-way, cylindrical filter cartridge 11 can be fitted in the coaxial seats 9 and 10, made in the connecting endpiece 7 and in the connecting portion 8 of the handpiece 2.

A device made as described above thus achieves the preset aims thanks to a simple connector enabling a cylindrical filter to be fitted between the handpiece and the conduit in such a way as to effectively filter the fluid in a zone that can be easily accessed by the health care provider and that can therefore be easily sterilised at any time.

Further, the positioning of the filter in the zone of interface between handpiece and conduit allows the filter to be quickly and easily changed at any time to guarantee the highest level of sterility protecting the conduit from contamination by fluid sucked back into it from the handpiece.

It will be understood that the invention can be subject to modifications and variations without thereby departing from the scope of the inventive concept. Moreover, all the details of the invention may be substituted by technically equivalent elements.

## Claims

1. A filtering device applicable to supply conduits (1) for handpieces (2), the conduits (1) comprising: at least one first channel (3) that supplies an operating fluid to the handpiece (2); the handpiece (2) being equipped with a second channel (4) for the passage of fluid; there being connecting means (5) operating between the first and second channels (3, 4) at the ends of the supply conduit (1) and of the handpiece (2), respectively, in such a way as to allow the fluid to flow into the handpiece (2); the filtering device being **characterised in that** it comprises means (6) for filtering said fluid and fitted to the connecting means (5) between the conduit (1) and the handpiece (2).

2. The device according to claim 1, **characterised in that** the means (6) for filtering the fluid are at least capable of trapping bacteria.

3. The device according to claim 1, **characterised in that** the means (6) for filtering the fluid can be fitted to the end of the conduit (1) forming the connecting means (5).

4. The device according to claim 1, **characterised in that** the means (6) for filtering the fluid can be fitted to the end of the handpiece (2) forming the connecting means (5).

5. The device according to claim 1, where the connecting means (5) comprise a connecting endpiece (7) fitted to the end of the conduit (1) and being fastened to a corresponding connecting portion (8) located on the end of the handpiece (2) in such a way as to join the first and the second channel (3, 4), the device being **characterised in that** the filtering means (6) can be fitted to the connecting endpiece (7).

6. The device according to claim 1, where the connecting means (5) comprise a connecting endpiece (7) fitted to the end of the conduit (1) and being fastened to a corresponding connecting portion (8) located on the end of the handpiece (2) in such a way as to join the first and the second channel (3, 4), the device being **characterised in that** the filtering means (6) can be fitted to the connecting portion (8) of the handpiece (2).

7. The device according to claim 5, **characterised in that** the connecting endpiece (7) presents a seat (9) formed by a corresponding enlarged end portion of the first channel (3) designed to allow connection to the filtering means (6).

8. The device according to claim 6, **characterised in that** the connecting portion (8) of the handpiece (2) presents a seat (10) formed by a corresponding enlarged end portion of the second channel (4) designed to allow connection to the filtering means (6).

9. The device according to claim 1, where the connecting means (5) comprise a connecting endpiece (7) fitted to the end of the conduit (1) and being fastened to a corresponding connecting portion (8) located on the end of the handpiece (2) in such a way as to join the first and the second channel (3, 4), the device being **characterised in that** the connecting endpiece (7) and the connecting portion (8) fitted to the end of the handpiece (2) each present a coaxial seat (9, 10) formed by corresponding enlarged coaxial end portions of the first and of the second channel (3, 4), both designed to allow connection to the filtering means (6).

10. The device according to claim 1, **characterised in that** the filtering means (6) consist of a cylindrical filter cartridge (11).

11. The device according to claim 1, **characterised in that** the filtering means (6) consist of a cylindrical, two-way filter cartridge (11).

12. The device according to claim 1, **characterised in that** the filtering means (6) consist of a cylindrical, filter cartridge (11) of the disposable, single-use type.

13. The device according to claim 1, **characterised in that** the filtering means (6) consist of a cylindrical, filter cartridge (11) of the disposable, single-use type made of spongy plastic material.

14. The device according to claim 1, **characterised in that** the filtering means (6) consist of a cylindrical, two-way filter cartridge (11) of the disposable, single-use type made of spongy plastic material.

15. The device according to claim 9, **characterised in that** the filtering means (6) consist of a cylindrical, two-way filter cartridge (11) of the disposable, single-use type made of spongy plastic material; it being possible to fit the filter cartridge (11) in the coaxial seats (9, 10), made in the connecting endpiece (7) and in the connecting end portion (8) of the handpiece (2).
